# EUROPEAN PATENT SPECIFICATION

(11) **EP 1 377 002 B1**
(45) Date of publication and mention of the grant of the patent: **04.10.2006**
(21) Application number: 02014429.1
(22) Date of filing: 28.06.2002
(51) Int. Cl.: H04M 3/533, H04Q 7/22, H04M 1/2745

(54) **Automated sending of preconfigured messages**
Automatisiertes Senden von vorkonfigurierten Nachrichten
Envoi automatique de messages préconfigurés

(43) Date of publication of application: 02.01.2004
(73) Proprietor: Sony Ericsson Mobile Communications AB, 221 88 Lund (SE)
(72) Inventor: Wong, Marcel, 22237 Lund (SE); Svensson, Magnus, 21132 Malmö (SE); Rang, Maria, 23741 Bjärred (SE)
(74) Representative: Dahnér, Christer

(56) References cited:
- EP-A- 1 189 412
- US-A- 5 787 151
- US-A- 6 044 275
- ANONYMOUS: "Siemens C45 USER GUIDE" SIEMENS C45 USER GUIDE, 2001, XP002221958

## Description

### TECHNICAL FIELD OF THE INVENTION

The present invention relates to the field of computer communication and telecommunication. More particularly the present invention relates to a method of sending messages over networks, an electronic device for sending such messages as well as a computer readable medium including program code for performing said method and a computer program element including such code.

### DESCRIPTION OF RELATED ART

It is known within the field of computers and wireless communication to send different types of messages, like e-mail and SMS (Short Message Service). In cases of e-mail it is also known to attach different types of files to an e-mail, where these files can be video-files, text files, audio files or image files. Recently there has been a development of a new type of messages in wireless communications. These messages are called MMS (Multimedia Messaging Service). In these MMS messages it is possible to include such things as photos, sound files or video files. The files that can be included can also be presented directly to a recipient without having being opened by him or her, i.e. they are not attachments.

It is also known to provide a calendar and clock where the date is set both in computers and cellular phones.

It is furthermore known to store information about contacts in a special area. This information often includes information about position, phone number, e-mail address and can also include information about birthdays and anniversaries. In the case of computer systems this information is usually available in connection with the software for sending e-mails, like for instance in Microsoft's Outlook-system. Here there is also normally provided a Calendar.

In the world of cellular phones the contact information is normally provided in connection with PIM (Personal Information Management) software, where phone book, calendar, electronic notes as well as a section with information about contacts is present. A PIM nowadays also has a vCard section, where contact information in the form of electronic business cards can be sent and received.

In the document "Siemens User Guide", 2001, XP002221958, there is described a calendar function of a cellular phone. It is here possible to set an anniversary in the same way that , an appointment for a meeting is set. A user can then be informed of an anniversary in the same way as he is informed of an upcoming event.

The document US-A-5 787 151 describes a service provided in a telecommunication system in the form of a telephony based electronic greeting card service. This service creates customized audio greeting cards. When a greeting card is to be sent, the system sets up a voice connection to a recipient. An audio message is then played to the recipient on the voice connection as the greeting card.

The document US-A-6 044 275 describes sending an SMS message from a mobile subscriber to an SMS service centre. The delivery time of the SMS to a recipient can be decided by the mobile subscriber by entering a requested time of delivery.

The document EP-1189412 describes a database including entries in the form of telephone numbers including old and new area codes for the telephone numbers. Entries in an electronic communication device can be updated from the database. The electronic communication device can be a phone.

There thus exist a number of tools for sending messages, but there is a need for being able to send special electronic messages automatically, which is not present in the systems of today.

### SUMMARY OF THE INVENTION

The present invention is directed towards solving the problem of sending specialised electronic messages to certain selected recipients, without the user having to do anything more than possibly accepting the sending of a specialised message.

According to a first aspect of the invention this problem is solved by a method of automatically sending special messages from a portable communication device to a selected recipient including the steps of: retrieving date information from an electronic date determination unit, retrieving first recipient related information from an electronic contact register, and automatically sending a special pre-configured electronic message over a network to the recipient in dependence of the date information and the first recipient related information.

According to a second aspect of the invention, this problem is also solved by a portable communication device for automatically sending special messages to a selected recipient comprising: an electronic date determination unit, an electronic contact register, a message transfer unit, a pre-configured message store and a control unit. The control unit is arranged to retrieve date information from the electronic data determination unit and first recipient related information relating to a recipient from the electronic contact register and effectuate automatic sending of a special pre-configured message to the recipient in dependence of the date information and the first recipient related information.

According to a third aspect of the present invention, this problem is furthermore solved by a program product stored on a computer readable medium, having thereon: computer program code means, to make a computer or an electronic equipment execute, when said program is loaded in the computer or the electronic equipment, retrieving of date information from an electronic date determination unit, retrieving of recipient related information from an electronic contact register, and effectuating automatic sending of a special pre-configured electronic message over a network to the recipient in dependence of the date information and the recipient related information.

According to a fourth aspect of the present invention this problem is furthermore solved by a computer program element comprising: computer program code means to make a computer or an electronic equipment execute retrieving of date information from an electronic date determination unit, retrieving of recipient related information from an electronic contact register, and effectuating automatic sending of a special pre-configured electronic message over a network to the recipient in dependence of the date information and the recipient related information.

The present invention is furthermore directed towards solving the problem of letting a user make a finer selection of which recipient to send a specialised message to.

According to a fifth aspect of the invention this problem is solved by a method, which includes the steps of the first aspect and furthermore the step of retrieving second recipient related information from the electronic contact register and sending the message also in dependence of the second recipient related information.

According to a sixth aspect of the present invention this problem is also solved by a portable communication device, which includes the features of the second aspect and where the control unit is further arranged to retrieve second recipient related information from the electronic contact register and effectuate sending of the message also in dependence of the second recipient related information.

A seventh aspect of the invention includes the steps of the first aspect and further the steps of prompting a user about sending the message and sending the message if the user has accepted sending.

An eight aspect of the invention includes the steps of the first aspect and further the step of retrieving the name of the recipient from the contact register and inserting the name into the message prior to sending.

A ninth aspect of the invention includes the steps of the first aspect and furthermore directly sending the message to a terminal of the recipient.

A tenth aspect of the invention includes the steps of the first aspect and furthermore sending of the message to a remote server, which pushes it to a terminal of the recipient it.

An eleventh aspect of the invention includes the steps of the first aspect and furthermore the step of receiving contact information about a recipient from a remote server and then placing it in the contact register.

A twelfth aspect of the invention includes the features of the second aspect and where the control unit is further arranged to prompt a user about sending the message and effectuate sending of the message if the user has accepted sending.

A thirteenth aspect of the invention includes the features of the second aspect and where the control unit is further arranged to retrieve the name of the recipient from the contact register and to insert the name into the message prior to sending.

A fourteenth aspect of the invention includes the features of the second aspect and where the control unit further effectuates sending of the message directly to a terminal of the recipient.

A fifteenth aspect of the invention includes the features of the second aspect and where the control unit further effectuates sending of the message to a remote server, which pushes it to the recipient.

A sixteenth aspect of the invention includes the features of the second aspect and where the message transfer unit receives contact information about a recipient from a remote server and the control unit is further arranged to place this information in the contact register.

A seventeenth aspect of the invention includes the features of the fifteenth aspect and where the device is a cellular phone.

In one special case of the preferred embodiment according to the present invention based on the sixteenth aspect, the first mentioned problem is solved by automatically sending a birthday greeting to a recipient based on the information in a contact section in a phone or computer.

The invention has the following advantages. The user can automatically send specialised greetings like Christmas cards and birthday greetings without having to actually write the greeting. This can avoid embarrassing moments for users that have bad memories or are too busy to send greetings, but still wish to send greetings. This invention thus avoids disappointing people a user cherishes and have close. Because of the automatic way in which specialised messages are sent, the sending also goes fast and simple and with little effort input by the user.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 shows an electronic device in the form of a cellular phone,
fig. 2 shows the phone in fig. 1 connected to a server via a cellular network,
fig. 3 shows a block schematic of a messaging unit and PIM unit together with a system clock in the interior of the phone in fig. 1,
fig. 4 shows a block schematic of different parts of the messaging unit and the PIM unit together with the system clock in fig. 2,
fig. 5 shows a flow chart of a method of performing the method according to a preferred embodiment of the invention,
fig. 6 shows a flow chart of a method of performing the method according to an alternative embodiment of the invention, and
fig. 7 shows a CD Rom on which program code for executing the method according to the invention is provided.

### DETAILED DESCRIPTION OF EMBODIMENTS

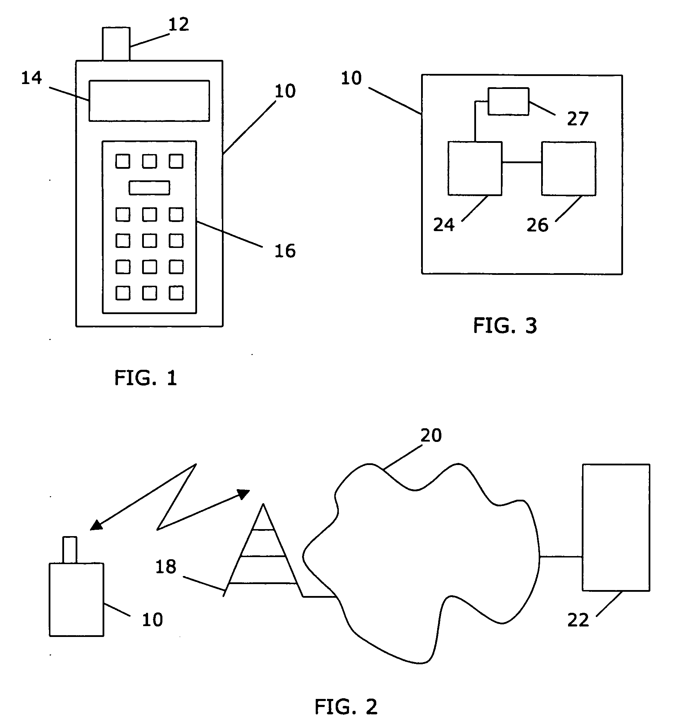

An electronic equipment or device 10 according to the invention is shown in fig. 1. In the preferred embodiment the device is a cellular phone 10 having an antenna 12, a display 14 and a keypad 16 including a number of keys. The keypad 16 is used for entering information such as selection of functions and responding to prompts and the display 14 is used for displaying functions and prompts to a user of the phone. The antenna 12 is used for communication with other users via a network. A cellular phone is just one example of a device in which the invention can be implemented. The invention can for instance also be used in a PDA (personal digital assistant), a palm top computer, a lap top computer and even on a regular computer such as a PC (personal computer), as long as the device has access to some kind of network over which messages can be sent.

Fig. 2 shows the cellular phone 10 connected to a cellular network 20 via a base station 18 for communication with a server 22 also connected to the network 20. The network is normally a GSM-type of network or a GPRS network. It is of course also possible that the network is WCDMA network. The server 22 is a server supplying chat possibilities to the phone, like for instance in the form of wireless village. The server 22 can be directly connected to the cellular network 20, or be connected to it via some other network. The network does of course not have to be a cellular network but can be some type of network, such as Internet, a corporate intranet, a LAN or a wireless LAN. It can also be a so-called PSTN (Public Switched Telephone Network). The connection between the cellular phone and the server 22 will be described in more detail later.

Fig. 3 shows part of the interior of the cellular phone that are relevant for the present invention. The phone 10 includes a messaging unit 24 connected to a PIM (Personal Information Management) unit 26. The phone naturally includes other things like radio circuits, which are used for sending messages, but the PIM unit 26 and the messaging unit 24 are the parts most relevant to the present invention. The phone also has a first electronic determination unit in the form of a system clock 27, which can be set to indicate the current date in addition to the time of the day.

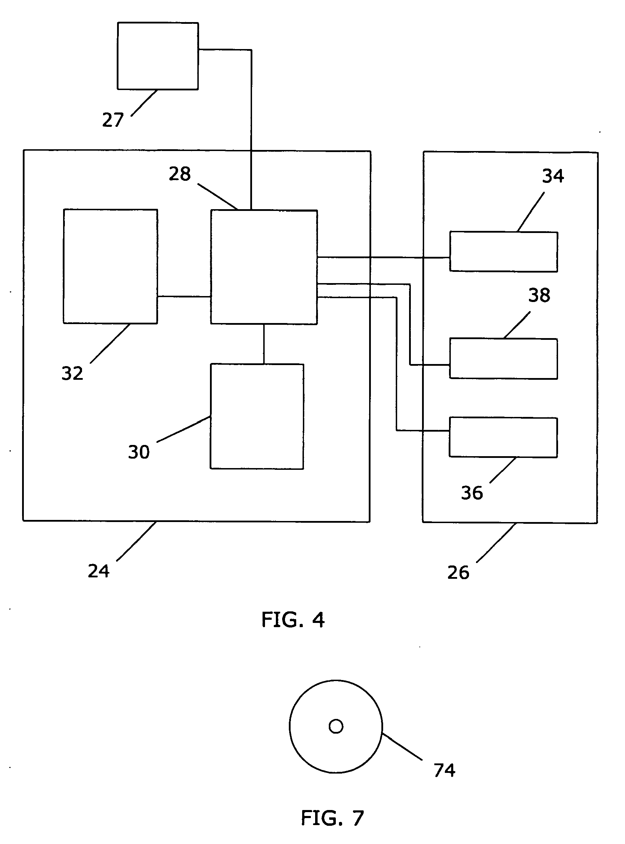

Fig. 4 shows yet a block schematic of different parts of the messaging unit 24 and the PIM unit 26 as well as the system clock 27. The messaging unit 24 includes a control unit 28, which is connected to a message transfer unit 32 and to a pre-configured message store or memory 30 including specialised messages. The control unit 28 is furthermore connected to the system clock 27. The PIM unit includes a second electronic date determination unit or a calendar 34, a first electronic contact register or contacts unit 38 and a second electronic contacts unit or a vCard unit 36. The calendar 34, contacts unit 38 and vCard unit 36 in the PIM unit 26 are connected to the control unit 28. There can of course be more different units existing in the PIM unit 26 and the messaging unit 24, but these are the units relevant for the present invention. The calendar 34 is an electronic calendar, which shows current date together with other dates both in the future as well as backwards in time. The contacts section includes information about persons that can be called up or which messages can be sent to. Typical contact information besides different types of phone numbers are title, business address, home address as well as possible extra information such as birthday and anniversary of the contact in question. The vCard unit 36 includes much of the same information as the contacts section in the form of a number of vCards. However a vCard has a special format which is possible to send to others as well as it is possible to receive from others. The vCard information is thus sometimes transferred to the contacts unit.

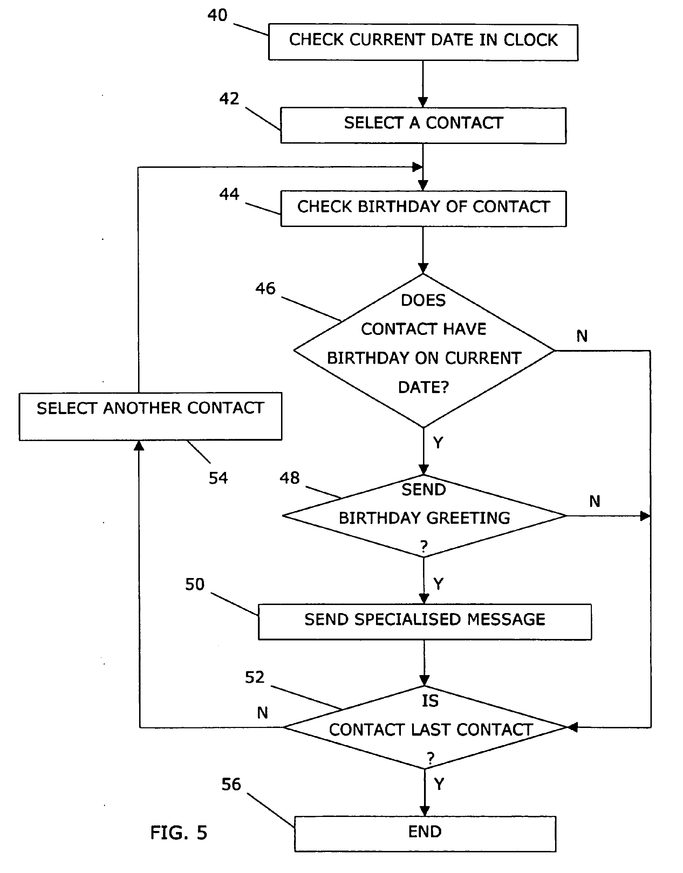

The functioning of the present invention will now be described in relation to the previously described fig. 4 together with fig. 5, which shows a flow chart of a preferred embodiment of a method according to the invention.

The method starts with the control unit 28 retrieving date information by checking the date in the system clock 27, step 40. The control unit then continues by selecting a first contact, step 42. This is in the preferred embodiment done by selecting a vCard from the vCard unit 36. I should however be realised that the contact might just as well have been selected from the contacts unit 38. Thereafter the control unit 28 checks the birth date of the contact, step 44. This can also be seen as retrieving first recipient related information from the vCard unit 36. If the contact does not have a birthday on the date in the clock, step 46, then the method skips a number of steps and jumps to step 52 (to be described later). If the contact has birthday on the date of the clock, step 46, then the user of the phone is prompted via the display if he wants to send a birthday greeting or not, step 48. If the user does not want to send a greeting, step 48, the method jumps to step 52. If however the user wants to send a birthday greeting, step 48, the control unit fetches a pre-configured birthday message from the memory 30 and enters the name of contact or recipient from the vCard into the message. It then transfers the message to the transfer unit 32, from where the specialised message is sent to a terminal of the recipient, step 50.

This can be seen as the control unit 28 effectuating the sending of a special pre-configured message in dependence of the date information and the first recipient related information. The control unit 28 then checks if this was the last contact checked, step 52, and if it was the method is ended, step 56. If it was not the last contact the control unit continues and selects another contact, step 54. The previously mentioned steps 44 - 52 are then repeated as long as there are contacts left which have not been checked.

The specialised message sent is preferably an MMS message, which might show a moving and/or still picture and/or play a sound. It should also be realised that it is possible to include more than one object of the same type in the same MMS message. As is known within the art an MMS message contains a header and a form field followed by a body. The body contains different objects like text objects and picture objects as well as a SMIL object, which keeps track of when and how the other objects are to be played or displayed. The MMS message is normally sent via a GPRS connection.

There are some possible variations which are apparent here. First of all the user might not be prompted about birthday greetings, but these can be sent automatically. Secondly the date can be checked in the calendar instead of in the clock. The method could also go through all contacts before prompting the user about sending messages or not. Alternatively the message could be sent beforehand, like a day or a few days before the actual birthday. The method can also be applied to anniversaries or any date of importance entered for a contact. There can also be a special MMS-flag set in the vCards of the vCard unit indicating only those contacts for which a birthday greeting is to be sent so that birthday greetings are only sent to those contacts for which the MMS-flag is set and that have a birthday noted in the vCard unit. This can be seen as the control unit retrieving second recipient related information from the electronic contact register.

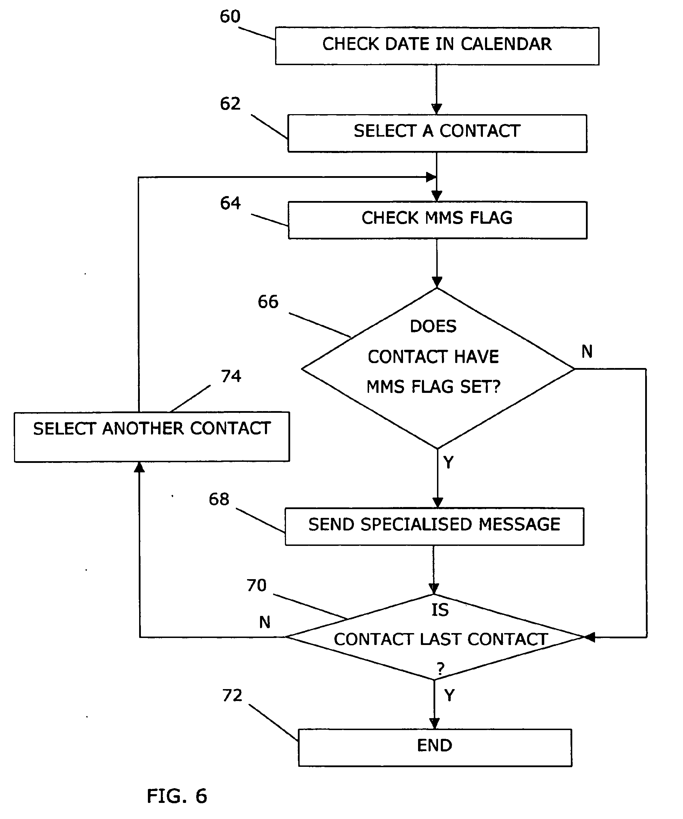

An alternative embodiment will now be described in relation to fig. 6, which shows a second flowchart of an alternative method according to the invention. Here first the control unit checks the date in the calendar, step 60. It then checks for special holiday dates like Christmas, Easter or the like. The control unit then selects a contact from the vCard unit 36, step 62. For this contact it checks if a special MMS flag is set by the user, step 64. This flag indicates if the contact is one which shall receive a greeting or not. If the contact does not have a MMS flag set, step 66, the method jumps to step 70. If however the contact has a MMS flag set, step 66, a specialised message is fetched from the memory 30 and sent to the contact or recipient via the transfer unit 32, step 68. Also here the name is entered into the message by the control unit 28. Then the method goes on to check if the contact was the last contact, step 70. If he/she was not, another contact is selected, step 74 and steps 64 - 70 are repeated. If he/she was the last contact the method is ended, step 72.

Also here messages can be sent a few days in advance, the user can also get to accept or reject sending of a message. The sending of messages can also be performed after all contacts have been searched.

MMS messages are normally sent to a server, which then pushes the message to the terminal of the recipient. It is possible though that messages can be sent directly from terminal to terminal though in the future.

According to one embodiment of the invention the vCard information can be received from a server, which administers a so-called wireless village or IC Q where different people can chat with each other. Here the server keeps a contact list for the user, from which the vCard information about one or more contacts or possible recipients can be downloaded into the phone of the user. The phone can then also send specialised messages to the persons associated with the downloaded vCard information.

The device according to the present invention is preferably provided in the form of one or more processors with corresponding memory containing the program code and with memories containing the contact information and specialised messages. The transfer unit is provided in the form of standard radio circuits and uses standard protocols.

The program code mentioned above can also be provided on a data carrier such as a CD ROM disc 74 as depicted in fig. 7, which will perform the invention when loaded into a computer or into a phone having suitable processing capabilities. The program code can also be downloaded remotely from a server either outside or inside the cellular network or be downloaded via a computer like a PC to which the phone is temporarily connected.

The messages mentioned before are pre-configured. They are thus normally provided by a message provider, like for instance the operator of the network. It is also possible that the user can design his own special messages.

The present invention has several advantages. With the present invention a user can easily send special greetings to people he wants to send in a fast, simple and automatic way. He does not have to browse large amounts of information about all his contacts and look for important events in order to send a special message. The invention makes it possible to filter out important information in the PIM and lets the user make people happy by remembering their birthdays and other important dates in a simple fashion.

The messages sent are preferably MMS messages. The invention is however not limited to these types of messages. It is equally as well applicable for any type of electronic messages such as SMS messages or e-mail messages.

## Claims

1. Method of automatically sending special messages from a portable communication device to a selected recipient including the steps of:
retrieving date information from an electronic date determination unit (40; 60), **characterised by** the further steps of
retrieving first recipient related information from an electronic contact register (44; 64), and
automatically sending a special pre-configured electronic message over a network to the recipient in dependence of the date information and the first recipient related information (50; 68).

2. Method according to claim 1, further including the step of retrieving second recipient related information from the electronic contact register and sending the message also in dependence of the second recipient related information.

3. Method according to claim 1 or 2, further including prompting a user about sending the message (48) and sending the message if the user has accepted sending.

4. Method according to any previous claim, further including the step of retrieving the name of the recipient from the contact register and inserting the name into the message prior to sending.

5. Method according to any previous claim, wherein the message is sent directly to a terminal of the recipient.

6. Method according to any of claims 1 - 4, wherein the message is sent to a remote server, which pushes it to a terminal of the recipient.

7. Method according to any previous claim, wherein contact information about a recipient is first received from a remote server and then placed in the contact register.

8. Portable communication device for automatically sending special messages to a selected recipient comprising:
an electronic date determination unit (27; 34),
an electronic contact register (36; 38),
a message transfer unit (32), and
a pre-configured message store (30),
**characterised by**
a control unit (28) arranged to retrieve date information from the electronic data determination unit and first recipient related information relating to a recipient from the electronic contact register and effectuate automatic sending of a special pre-configured message to the recipient in dependence of the date information and the first recipient related information.

9. Portable communication device according to claim 8, wherein the control unit is further arranged to retrieve second recipient related information from the electronic contact register and effectuate sending of the message also in dependence of the second recipient related information.

10. Portable communication device according to claim 8 or 9, wherein the control unit is further arranged to prompt a user about sending the message and effectuate sending of the message if the user has accepted sending.

11. Portable communication device according to any of claims 8 - 10, wherein the control unit is further arranged to retrieve the name of the recipient from the contact register and to insert the name into the message prior to sending.

12. Portable communication device according to any of claims 8 - 11, wherein the control unit effectuates sending of the message directly to a terminal of the recipient.

13. Portable communication device according to any of claims 8 - 11, wherein the control unit effectuates sending of the message to a remote server, which pushes it to the recipient.

14. Portable communication device according to any of claims 8 - 13, wherein the message transfer unit (32) receives contact information about a recipient from a remote server and the control unit is further arranged to place this information in the contact register.

15. Portable communication device according to any of claims 8 - 12, wherein the device is a cellular phone.

16. A program product stored on a computer readable medium (74), having thereon:
computer program code means, to make a portable communication device execute, when said program is loaded in the portable communication device, retrieving of date information from an electronic date determination unit,
**characterised by**
retrieving of recipient related information from an electronic contact register, and
effectuating automatic sending of a special pre-configured electronic message over a network to the recipient in dependence of the date information and the recipient related information.

17. A computer program element comprising:
computer program code means to make a portable communication device execute
retrieving of date information from an electronic date determination unit,
**characterised by**
retrieving of recipient related information from an electronic contact register, and
effectuating automatic sending of a special pre-configured electronic message over a network to the recipient in dependence of the date information and the recipient related information.

## Patentansprüche

1. Verfahren zum automatischen Senden von Spezialnachrichten von einer tragbaren Kommunikationseinrichtung zu einem ausgewählten Empfänger, welches folgende Schritte aufweist:
Abrufen von Datumsinformation von einer elektronischen Datumsbestimmungseinheit (40; 60),
**gekennzeichnet durch** die weiteren Schritte von:
Abrufen erster empfänger-bezogener Information von einem elektronischen Kontaktregister (44; 64), und
Automatisches Senden einer vorkonfigurierten elektronischen Nachricht über ein Netzwerk zum Empfänger in Abhängigkeit von der Datumsinformation und der ersten empfänger-bezogenen Information (50; 68).

2. Verfahren nach Anspruch 1, welches außerdem den Schritt aufweist, zweite empfänger-bezogene Information vom elektronischen Kontaktregister abzurufen und die Nachricht ebenfalls in Abhängigkeit von der zweiten empfänger-bezogenen Information zu senden.

3. Verfahren nach Anspruch 1 oder 2, welches außerdem das Hinweisen eines Benutzers über das Senden der Nachricht (48) und das Senden der Nachricht aufweist, wenn der Benutzer Senden angenommen hat.

4. Verfahren nach einem der vorhergehenden Ansprüche, welches außerdem den Schritt aufweist, den Namen des Empfängers vom Kontaktregister abzurufen und vor dem Senden den Namen in die Nachricht einzufügen.

5. Verfahren nach einem der vorhergehenden Ansprüche, wobei die Nachricht unmittelbar zu einem Endgerät des Empfängers gesendet wird.

6. Verfahren nach einem der Ansprüche 1-4, wobei die Nachricht zu einem fernen Server gesendet wird, der diese zu einem Endgerät des Empfängers schiebt.

7. Verfahren nach einem der vorhergehenden Ansprüche, wobei die Kontaktinformation über einen Empfänger zunächst von einem fernen Server empfangen wird und dann im Kontaktregister platziert wird.

8. Tragbare Kommunikationseinrichtung zum automatischen Senden von Spezialnachrichten zu einem ausgewählten Empfänger, welche aufweist:
eine elektronische Datumsbestimmungseinheit (27; 34),
ein elektronisches Kontaktregister (36; 38),
eine Nachrichtenübertragungseinheit (32), und
einen vorkonfigurierten Nachrichtenspeicher (30),
**gekennzeichnet durch**
eine Steuereinheit (28), die eingerichtet ist, Datumsinformation von der elektronischen Datumsbestimmungseinheit und erste empfänger-bezogene Information in Bezug auf einen Empfänger vom elektronischen Kontaktregister abzurufen und automatisches Senden einer speziellen vorkonfigurierten Nachricht zum Empfänger in Abhängigkeit von der Datumsinformation und der ersten empfänger-bezogenen Information zu bewirken.

9. Tragbare Kommunikationseinrichtung nach Anspruch 8, wobei die Steuereinheit außerdem eingerichtet ist, zweite empfänger-bezogene Information vom elektronischen Kontaktregister abzurufen und Senden der Nachricht auch in Abhängigkeit der zweiten empfänger-bezogenen Information zu bewirken.

10. Tragbare Kommunikationseinrichtung nach Anspruch 8 oder 9, wobei die Steuereinheit weiter eingerichtet ist, einen Benutzer über das Senden der Nachricht hinzuweisen und Senden der Nachricht zu bewirken, wenn der Benutzer Senden angenommen hat.

11. Tragbare Kommunikationseinrichtung nach einem der Ansprüche 8-10, wobei die Steuereinheit weiter eingerichtet ist, den Namen des Empfängers vom Kontaktregister abzurufen und vor dem Senden den Namen in die Nachricht einzufügen.

12. Tragbare Kommunikationseinrichtung nach einem der Ansprüche 8-11, wobei die Steuereinheit das Senden der Nachricht unmittelbar zu einem Endgerät des Empfängers bewirkt.

13. Tragbare Kommunikationseinrichtung nach einem der Ansprüche 8-11, wobei die Steuereinheit das Senden der Nachricht zu einem fernen Server bewirkt, der diese zum Empfänger schiebt.

14. Tragbare Kommunikationseinrichtung nach einem der Ansprüche 8-13, wobei die Nachrichtenübertragungseinheit (32) Kontaktinformation über einen Empfänger von einem fernen Server empfängt und die Steuereinheit weiter eingerichtet ist, diese Information im Kontaktregister zu platzieren.

15. Tragbare Kommunikationseinrichtung nach einem der Ansprüche 8-12, wobei die Einrichtung ein Zellulartelefon ist.

16. Programmprodukt, welches auf einem computer-lesbaren Träger (74) gespeichert ist, auf welchem ist:
eine Computerprogramm-Codeeinrichtung, um erwirken zu lassen, dass eine tragbare Kommunikationseinrichtung, wenn das Programm in die tragbare Kommunikationseinrichtung geladen ist, Datumsinformation von einer elektronischen Datumsbestimmungseinheit abruft,
**gekennzeichnet durch**
Abrufen von empfänger-bezogener Information von einem elektronischen Kontaktregister, und
Erwirken automatischen Sendens einer speziellen vorkonfigurierten elektronischen Nachricht über ein Netzwerk zum Empfänger in Abhängigkeit von der Datumsinformation und der empfänger-bezogenen Information.

17. Computerprogrammelement, welches aufweist:
eine Computerprogramm-Codeeinrichtung, um eine tragbare Kommunikationseinrichtung ausführen zu lassen:
Abrufen von Datumsinformation von einer elektronischen Datumsbestimmungseinheit,
**gekennzeichnet durch**
Abrufen von empfänger-bezogener Information von einem elektronischen Kontaktregister, und
Erwirken automatischen Sendens einer speziellen vorkonfigurierten elektronischen Nachricht über ein Netzwerk zum Empfänger in Abhängigkeit von der Datumsinformation und der empfänger-bezogenen Information.

## Revendications

1. Procédé d'envoi automatique de messages spéciaux entre un dispositif de communication portable et un destinataire sélectionné, comprenant l'étape consistant à :
obtenir des informations de date d'une unité électronique de détermination de la date (40 ; 60),
**caractérisé par** les étapes consistant à :
obtenir des informations liées à un premier destinataire auprès d'un registre électronique de contacts (44 ; 64), et
envoyer automatiquement au destinataire sur un réseau un message électronique spécial préconfiguré, en fonction des informations de date et des informations liées au premier destinataire (50 ; 88).

2. Procédé selon la revendication 1, comprenant en outre l'étape consistant à obtenir des informations liées à un second destinataire auprès du registre électronique de contacts et envoyer le message, également en fonction des informations liées au second destinataire.

3. Procédé selon la revendication 1 ou 2, comprenant en outre les étapes consistant à envoyer à un utilisateur une proposition d'envoi du message (48) et à envoyer le message si l'utilisateur a accepté l'envoi.

4. Procédé selon l'une quelconque des revendications précédentes, comprenant en outre l'étape consistant à obtenir le nom du destinataire auprès du registre de contacts et à insérer le nom dans le message avant son envoi.

5. Procédé selon l'une quelconque des revendications précédentes, dans lequel le message est directement envoyé à un terminal du destinataire.

6. Procédé selon l'une quelconque des revendications 1 à 4, dans lequel le message est envoyé à un serveur distant qui l'achemine vers un terminal du destinataire.

7. Procédé selon l'une quelconque des revendications précédentes, dans lequel les informations de contact sur un destinataire sont d'abord reçues d'un serveur distant, puis placées dans le registre de contacts.

8. Dispositif de communication portable destiné à envoyer automatiquement des messages spéciaux à un destinataire sélectionné, comprenant :
une unité électronique de détermination de la date (27 ; 34) ;
un registre électronique de contacts (36 ; 38) ;
une unité d'acheminement de messages (32) ; et
une mémoire de messages préconfigurés (30),
**caractérisé par** une unité de commande (28) agencée pour obtenir des informations de date de l'unité électronique de détermination de la date et des informations liées à un destinataire auprès du registre électronique de contacts et pour opérer l'envoi automatique au destinataire d'un message spécial préconfiguré, en fonction des informations de date et des informations liées au premier destinataire.

9. Dispositif de communication portable selon la revendication 8, dans lequel l'unité de commande est en outre agencée pour obtenir des informations liées à un second destinataire auprès du registre électronique de contacts et pour opérer l'envoi du message, également en fonction des informations liées au second destinataire.

10. Dispositif de communication portable selon la revendication 8 ou 9, dans lequel l'unité de commande est en outre agencée pour envoyer à un utilisateur un message de sollicitation à propos de l'envoi du message et à opérer l'envoi du message si l'utilisateur a accepté l'envoi.

11. Dispositif de communication portable selon l'une quelconque des revendications 8 à 10, dans lequel l'unité de commande est en outre agencée pour obtenir le nom du destinataire auprès du registre de contacts et pour insérer le nom dans le message avant son envoi.

12. Dispositif de communication portable selon l'une quelconque des revendications 8 à 11, dans lequel l'unité de commande opère l'envoi directement vers un terminal du destinataire.

13. Dispositif de communication portable selon l'une quelconque des revendications 8 à 11, dans lequel l'unité de commande opère l'envoi vers un serveur distant qui l'achemine vers le destinataire.

14. Dispositif de communication portable selon l'une quelconque des revendications 8 à 13, dans lequel l'unité d'acheminement de messages (32) obtient des informations de contact sur un destinataire auprès d'un serveur distant et l'unité de commande est en outre agencée pour placer ces informations dans le registre de contacts.

15. Dispositif de communication portable selon l'une quelconque des revendications 8 à 12, dans lequel le dispositif est un téléphone cellulaire.

16. Progiciel stocké sur un support lisible par ordinateur (74), comportant :
un moyen de code de programme d'ordinateur, destiné à faire exécuter par un dispositif de communication portable, lorsque ledit programme est chargé dans le dispositif de communication portable, l'étape consistant à obtenir des informations de date auprès d'une unité électronique de détermination de la date,
**caractérisé par** les étapes consistant à obtenir des informations liées à un destinataire auprès d'un registre électronique de contacts, et
opérer l'envoi automatique au destinataire, sur un réseau, d'un message électronique spécial préconfiguré, en fonction des informations de date et des informations liées au destinataire.

17. Élément de progiciel comprenant :
un moyen de code de programme d'ordinateur, destiné à faire exécuter par un dispositif de communication portable l'étape consistant à :
obtenir des informations de date auprès d'une unité électronique de détermination de la date,
**caractérisé par** les étapes consistant à :
obtenir des informations liées à un destinataire auprès d'un registre électronique de contacts, et
opérer l'envoi automatique au destinataire, sur un réseau, d'un message électronique spécial préconfiguré, en fonction des informations de date et des informations liées au destinataire.
